# EUROPEAN PATENT SPECIFICATION

(11) **EP 3 505 651 B1**
(45) Date of publication and mention of the grant of the patent: **20.09.2023**
(21) Application number: 16919224.2
(22) Date of filing: 18.10.2016
(51) Int. Cl.: C22C 38/54, C21D 8/02, C21C 7/10, B22D 11/00, B21B 1/098

(54) **TOOTHED RACK STEEL PLATE HAVING THICKNESS OF 177.8 MM AND MANUFACTURED BY CONTINUOUS CASTING BILLET AND MANUFACTURING METHOD THEREFOR**
ZAHNSTANGENSTAHLPLATTE MIT EINER DICKE VON 177,8 MM UND HERGESTELLT DURCH STRANGGIESSEN SOWIE HERSTELLUNGSVERFAHREN DAFÜR
TÔLE D'ACIER À CRÉMAILLÈRE D'UNE ÉPAISSEUR DE 177,8 MM FABRIQUÉE PAR COULÉE CONTINUE DE BILLETTES ET SON PROCÉDÉ DE FABRICATION

(43) Date of publication of application: 03.07.2019
(73) Proprietor: Jiangyin Xing Cheng Special Steel Works Co., Ltd, Jiangyin Jiangsu 214429 (CN)
(72) Inventor: MIAO, Pifeng, Jiangyin Jiangsu 214429 (CN); QIAN, Gang, Jiangyin Jiangsu 214429 (CN); LIU, Guanyou, Jiangyin Jiangsu 214429 (CN); CHEN, Liang, Jiangyin Jiangsu 214429 (CN); WU, Xiaolin, Jiangyin Jiangsu 214429 (CN); LI, Jingtao, Jiangyin Jiangsu 214429 (CN); GAO, Zhuzhong, Jiangyin Jiangsu 214429 (CN); RUAN, Xiaojiang, Jiangyin Jiangsu 214429 (CN)
(74) Representative: Huang, Liwei
(86) International application number: PCT/CN2016/102350
(87) International publication number: WO 2018/072076

(56) References cited:
- CN-A- 101 845 588
- CN-A- 101 899 630
- CN-A- 102 181 801
- CN-A- 103 469 106
- CN-A- 103 556 075
- CN-A- 103 589 969
- CN-A- 103 695 803
- CN-A- 103 725 986
- CN-A- 103 938 110
- CN-A- 104 357 755
- CN-A- 104 561 772
- CN-A- 105 803 325
- CN-B- 103 469 106
- CN-B- 103 725 986
- JP-A- 2004 169 093
- JP-A- 2008 156 750

## Description

### Technical Field

The present application relates to a field of manufacturing a rack steel plate, specifically the invention relates to a method of manufacturing a rack steel plate with a thickness of 177.8 mm.

### Background Art

The rack steel plate for self-elevating marine platform requires high strength, good plasticity, high toughness and large thickness, and requires a uniform performance along the steel plate thickness direction, for example, the steel rack plate with a thickness of 177.8mm for self-elevating marine platform requires: yield strength is ≥690MPa, tensile strength is 770 - 940MPa, elongation is ≥14%, and at low temperature (normally, at 1/4 thickness of the steel plate at -40°, at the center of the steel plate, i.e. at 1/2 thickness of the steel plate at -30°C) Charpy impact energy is ≥69J. Hence, industry always devotes to developing a rack steel plate of large thickness that meets this requirement, and has developed using a moulded casting ingot to manufacture the rack steel plate of large thickness and the manufacturing method thereof. For example, the invention patent of publication number CN102345045A disclosed a rack steel plate with a thickness of 120-150mm by the moulded casting ingot for marine platform and manufacturing method thereof. With regards to the rack steel plate manufactured by the moulded casting ingot, not only the production technology is complicated but also the yield ratio is low, so that the manufacturing cost dramatically increases.

Some prior arts can be seen in CN 103469106B, CN 103725986B, CN 103938110A, and CN 103695803A.

### Disclosure of Invention

The invention is defined in claim 1.

The present invention provides a rack steel plate with a thickness of 177.8mm of high strength, good plasticity and excellent toughness at a low temperature, the rack steel plate adopts a manufacturing process of a continuous casting slab, and has advantages of simple process, low cost and efficiently quick etc.

Not being part of the present invention, a rack steel plate as well as a manufacturing process thereof is provided as below.

A rack steel plate with a thickness up to 177.8 mm by a continuous casting slab, the chemical constituents of the steel plate are, by mass percentage, C: 0.11-0.15%, Si: 0.15-0.35%, Mn: 0.95-1.25%, P: ≤0.010%, S: ≤0.002%, Cr: 0.45-0.75%, Mo: 0.4-0.6%, Ni: 1.3-2.6%, Cu: 0.2-0.4%, Al: 0.06-0.09%, V: 0.03-0.06%, Nb: ≤0.04%, N: ≤0.006%, B: 0.001-0.002%, the balance is Fe and unavoidable impurity elements.

Further, the thickness of the rack steel plate is 114.3-177.8mm, adopting manufacture by a continuous casting slab.

The mechanical performance of the rack steel plate satisfies: yield strength is ≥690MPa, tensile strength is 770-940MPa, elongation is ≥16%, area reduction of Z-direction of the steel plate is ≥35%, Charpy impact energy measured at 1/4 thickness of the steel plate at -40°C is >100J, Charpy impact energy measured at 1/2 thickness of the steel plate at -30°C is >100J, and Charpy impact energy measured at 1/2 thickness of the steel plate at -40°C is >100J.

The manufacturing process of the rack steel plate is, raw materials being processed by KR molten steel pretreatment, converter smelting, LF refining, RH refining, and continuous casting through a straight-arc continuous casting machine, in sequence, thereby obtaining high-purity molten steel and high-quality continuous casting slab of a thickness of 370 mm or more. The continuous casting slab meets following requirements: central segregation is equal to or better than class C grade 0.5, center porosity is equal to or better than grade 0.5, free of center cracks, corner cracks or triangular area cracks; regarding inclusions, coarse inclusions of Group A, Group B and Group C =0, coarse inclusions of Group D ≤0.5; fine inclusions of Group A ≤0.5; fine inclusions of Group B ≤0.5; fine inclusions of Group C = 0; fine inclusions of Group D ≤0.5; Group Ds ≤ 0.5.

Compared with the method adopting VD refining and a cast disclosed in invention patent of CN102345045A, the present invention adopts RH refining and continuous casting. The molten steel of much lower H content is obtained by RH refining so as to ensure the ability of resistance against hydrogen cracking of the rack steel plate and the mechanical performance at 1/2 thickness of the steel plate (center). The slab by continuous casting has a better central quality (for example, central segregation and center porosity and inclusions) than the ingot by moulded casting, helps to ensure the mechanical performance at 1/2 thickness of the steel plate.

The continuous casting slab is shielded with a cover and is slowly cooled to 200±50°C, then is removed out of the cover, to further decrease H content therein, thereby, further avoid hydrogen cracking of the steel plate and ensure the mechanical performance at 1/2 thickness of the steel plate. After slowly cooling, the surfaces of the continuous casting slab are cleaned to ensure the surface quality of the continuous casting slab, and simultaneously ensure that no cracks are generated on the surface of the continuous casting slab during the flame cleaning.

The continuous casting slab is heated to 1180-1280° C, and kept warm for 2-4 hours, and the alloy elements are sufficiently dissolved in steel, bringing the effect of the strength and toughness, to ensure the uniformity of constituents and mechanical performance of the final product. After keeping warm, the continuous casting slab is treated by high-pressure water descaling and then rolled under two stages: the first stage is coarse rolling, the rolling starting temperature is 1050-1150° C, and the total compression ratio is ≥ 40%, the rolling is performed under strong pressure, the highest reduction rate of a single pass is ≥ 17%.

Compared with the highest reduction rate of a steel plate of large thickness about 10% under the conventional coarse rolling in a single pass, when the highest reduction rate of a single pass is ≥ 17%, it is ensured that the defects at the center of the continuous casting slab are sufficiently healed, thereby to ensure the mechanical performance at 1/2 thickness of the rack steel plate of large thickness.

The second stage is fine rolling, the rolling starting temperature is 870-930°C, the total compression ratio is ≥20%, rolling until a thickness of finished products is achieved, after that, the steel plate is air-cooled and straightened;

The straightened steel plate is air-cooled to 600-650° C on a cooling table, and then is shielded with a cover and slowly cooled, the time is ≥ 72 hours, or the straightened steel plate is kept warm in 600-650° C for 24-72 hours and is cooled to 200 + 50° C along with the furnace in order to sufficiently decrease or remove H content in rolled steel plate and ensure the mechanical performance at 1/2 thickness of the finished steel plate, and then the product is air-cooled outside the furnace;

The steel plate which has been cooled to room temperature is treated by quenching and tempering treatment to obtain a finished rack steel plate of large thickness. The quenching heating of the quenching and tempering treatment is performed in a continuous furnace, the quenching heating temperature is 900-930° C, the time in the furnace is 1.8-2.0min/mm, a quenching machine is used during water quenching until the surface temperature of the steel plate is ≤100° C and then the steel plate is air-cooled to room temperature; tempering is performed in a continuous furnace, the tempering temperature is 600-660° C, the time in the furnace is 2.5-3.5 min/mm, and then the steel plate is air-cooled outside the furnace to room temperature.

The present invention aims at the demands in marine equipment manufacturing industry for a rack steel plate of high strength, high toughness, good plasticity and large thickness, directly adopts a continuous casting slab of high quality (low central segregation and center porosity, free of cracks) and of high purity manufactured by optimized chemical constituents, high-purity molten steel and optimized continuous casting technique (low casting superheat degree, low casting speed, accurate reduction parameters) as a slab, and manufactures the rack steel plate satisfying the requirements by controlling the rolling and the quenching and tempering treatment. The thickness of the rack steel plate is 177.8mm

Compared with the prior art, the main advantages of the present invention focus on:
The rack steel plate of large thickness in the present invention directly adopts the continuous slab without any other processing (for example, multiple plate slabs are formed into the composite slab by combined processing) as the rolling slab, and eliminates the process of cogging in rolling when using the moulded casting ingot as a slab, i.e. eliminating the process of cogging heating, cogging rolling and intermediate slab cutting and cleaning, at the same time, eliminates the combined processing process of the plate slab rolled with the composite slab, and simplifies the process. Compared with the rack steel plate manufactured by moulded casting ingot, the yield rate obviously increases by continuous casting slab, and the production hours are shorten. Hence it reduces the cost of manufacturing the rack steel plate of large thickness, overcomes the deficiencies of prior art, and has obvious cost advantages in industrial production.

In addition, the thickness of the continuous casting slab is far less than the thickness of ingot, so the compression ratio of the rack steel plate of large thickness by the continuous casting slab is smaller than that by the ingot. Hence, in case the reduction rate of a single pass can't be ensured, the central defects of the plate slab are not healed so that the central performance of the rack steel plate can't be ensured, it is also one of the important factors that restricts the increase of the thickness of the high performance rack steel plate. The present invention adopts a continuous casting slab of high quality (low central segregation and center porosity, free of cracks) and high purity manufactured by optimized continuous casting technique (low casting superheat degree, low casting speed, accurate reduction parameters) as a slab, and the highest reduction rate of a single pass is ≥17% in coarse rolling combined by strict control of H content in each stage of manufacturing the rack steel plate of large thickness, so that solves the problem, and thereby ensures the performance at the center of the rack steel plate.

### Mode(s) for Carrying Out the Invention

The present invention is further described in Embodiment 1.

### Embodiment 1

The thickness of the rack steel plate relating to the present embodiment is 177.8mm, the constituents and mass percentages including: C: 0.14%, Si: 0.24%, Mn: 1.08%, P: 0.004%, S: 0.0008%, Cr: 0.68%, Mo: 0.49%, Ni: 2.47%, Cu: 0.22%, Al: 0.073%, V: 0.036%, Nb: 0.02%, N: 0.0027%, B: 0.0013%, the balance is Fe and unavoidable impurity elements, Carbon equivalent Ceq ( = C + Mn/6 + (Cr + Mo + V)/5 + (Cu + Ni)/15 ) = 0.74%.

The process of manufacturing the rack steel plate of large thickness is as follows:
The raw materials configured by above constituents of the rack steel plate are processed in sequence by KR molten steel pretreatment, converter smelting, LF refining, RH refining, continuous casting through a straight-arc continuous casting machine (the thickness of the continuous casting slab is 450mm), shielding the continuous casting slab with a cover and slowly cooling, cleaning the continuous casting slab, heating (keeping warm), high-pressure water descaling, control rolling, straightening, slowly cooling under control, quenching and tempering treatment.

Further, the special process of above heating, control rolling and cooling is as flows: heating the continuous casting slab (central segregation is class C grade 0.5, center porosity is grade 0.5, free of center cracks, corner cracks and triangular area cracks, regarding inclusions, coarse inclusions of Group A, Group B, Group C and Group D=0; fine inclusions of Group A, Group B and Group D = 0.5; fine inclusions of Group C = 0, Group Ds = 0) to 1260°C and keeping warm for 3.5 hours, after outside the furnace treating the continuous casting slab by high-pressure water descaling, and then processing completely longitudinally rolling under two stages. The rolling starting temperature of the first stage (i.e. coarse rolling) is 1140° C, the thickness of the intermediate slab is 235mm, the total compression ratio = 47.8%, the highest reduction rate of a single pass = 18.1%; the rolling starting temperature of the second stage (i.e. fine rolling) is 880°C, the thickness of the finished plate is 177.8mm, the total compression ratio = 24.3%. After rolling, the continuous casting slab is straightened, and then is slowly cooled under a control condition (heating the steel plate to 620°C and keeping warm for 72 hours, and cooling to 200°C along with the furnace, and then air-cooling outside the furnace to room temperature).

The steel plate after slowly cooling is heated by quenching in a continuous furnace, the quenching heating temperature is 900° C, the time in the furnace is 1.8min/mm, a quenching machine is used during water quenching, until the surface temperature of the steel plate is 70°C, and then the steel plate is air-cooled to room temperature. The steel plate after quenching treatment is treated by tempering in a continuous furnace. The tempering temperature is 660° C, the time in the furnace is 2.8min/mm, and then the steel plate is air-cooled outside the furnace to room temperature.

The finished steel plate produced by above process has excellent combination performance of high strength, good plasticity, high toughness at a low temperature and high Z-direction performance, its mechanical performance is shown in table 1.

### Embodiment 2 (not being part of the present invention)

The thickness of the rack steel plate relating to the present embodiment is 152.4mm, the constituents and mass percentages including: C: 0.13%, Si: 0.23 %, Mn: 1.08%, P: 0.004%, S: 0.001%, Cr: 0.51%, Mo: 0.49%, Ni: 1.39%, Cu: 0.23%, Al: 0.063%, V: 0.038%, Nb: 0.0019%, N: 0.0042%, B: 0.0013%, the balance is Fe and unavoidable impurity elements, Carbon equivalent Ceq = 0.63%.

The process of manufacturing the rack steel plate of large thickness is as follows:
The raw materials configured by above constituents of the rack steel plate are processed in sequence by KR molten steel pretreatment, converter smelting, LF refining, RH refining, continuous casting through a straight-arc continuous casting machine (the thickness of the continuous casting slab is 370mm), shielding the continuous casting slab with a cover and slowly cooling, cleaning the continuous casting slab, heating (keeping warm), high-pressure water descaling, control rolling, straightening, shielding with a cover and stacking and slowly cooling, quenching and tempering treatment.

Further, the special process of above heating, control rolling and cooling is as flows: heating the continuous casting slab (central segregation is class C grade 0.5, center porosity is grade 0.5, free of center cracks, corner cracks and triangular area cracks, regarding inclusions, coarse inclusions of Group A, Group B, Group C and Group D =0; fine inclusions of Group A and Group B = 0.5; fine inclusions of Group C and Group D = 0, Group Ds = 0) to 1250°C and keeping warm for 2.5 hours, after outside the furnace treating the continuous casting slab by high-pressure water descaling, and then processing longitudinally rolling under two stages. The rolling starting temperature of the first stage (i.e. coarse rolling) is 1090° C, the thickness of the intermediate slab is 220 mm, the total compression ratio = 40.5%, the highest reduction rate of a single pass = 17.8%; the rolling starting temperature of the second stage (i.e. fine rolling) is 900°C, the thickness of the finished plate is 152.4 mm, the total compression ratio = 30.7%. After rolling the continuous casting slab is straightened, and then the straightened steel plate is cooled to 600-650° C on a cooling table, and then is removed away from the cooling table, and then is shielded with a cover and slowly cooled in a stack, until the steel plate is cooled to 200°C, slowly cooling of the steel plate is finished.

The steel plate after slowly cooling is treated by quenching and tempering treatment in a continuous furnace. The steel plate after slowly cooling is treated by quenching in a continuous furnace, the quenching heating temperature is 920° C, the time in the furnace is 1.8 min/mm, a quenching machine is used during water quenching until the surface temperature of the steel plate is 90°C, and then the steel plate is air-cooled to room temperature. The steel plate after quenching treatment is treated by tempering in a continuous furnace. The tempering temperature is 620° C, the time in the furnace is 3.5 min/mm, and then the steel plate is air-cooled outside the furnace to room temperature.

The finished steel plate produced by above process has excellent combination performance of high strength, good plasticity, high toughness at a low temperature and high Z-direction performance, its mechanical performance is shown in table 1.

### Embodiment 3 (not being part of the present invention)

The thickness of the rack steel plate relating to the present embodiment is 152.4 mm, the constituents and mass percentages including: C: 0.13%, Si: 0.23 %, Mn: 1.04%, P: 0.004%, S: 0.0011%, Cr: 0.50%, Mo: 0.47%, Ni: 1.42%, Cu: 0.22%, Al: 0.069%, V: 0.034%, Nb: 0.0015%, N: 0.0036%, B: 0.0012%, the balance is Fe and unavoidable impurity elements, Carbon equivalent Ceq = 0.61%.

The process of manufacturing the rack steel plate of large thickness is as follows:
The raw materials configured by above constituents of the rack steel plate are processed in sequence by KR molten steel pretreatment, converter smelting, LF refining, RH refining, continuous casting through a straight-arc continuous casting machine (the thickness of the continuous casting slab is 450 mm), shielding the continuous casting slab with a cover and slowly cooling, cleaning the continuous casting slab, heating (keeping warm), high-pressure water descaling, control rolling, straightening, shielding the continuous casting slab with a cover and stacking and slowly cooling, quenching and tempering treatment.

Further, the special process of above heating, control rolling and cooling is as flows: heating the continuous casting slab (central segregation is class C grade 0.5, center porosity is grade 0.5, free of center cracks, corner cracks and triangular area cracks, regarding inclusions, coarse inclusions of Group A, Group B, Group C and Group D =0; fine inclusions of Group A, Group B and Group D = 0.5; fine inclusions of Group C = 0, Group Ds = 0) to 1250°C and keeping warm for 2.5 hours, after outside the furnace treating the continuous casting slab by high-pressure water descaling, and then processing completely longitudinally rolling under two stages. The rolling starting temperature of the first stage (i.e. coarse rolling) is 1100° C, the thickness of the intermediate slab is 225 mm, the total compression ratio = 50%, the highest reduction rate of a single pass = 20%; the rolling starting temperature of the second stage (i.e. fine rolling) is 910°C, the thickness of the finished plate is 152.4 mm, the total compression ratio = 32.3%. After rolling the continuous casting slab is straightened, and then the straightened steel plate is cooled to 600-650° C on a cooling table, and then is removed away from the cooling table, and then is shielded with a cover and slowly cooled in a stack, until the steel plate is cooled to 200°C, slowly cooling of the steel plate is finished.

The steel plate after slowly cooling is treated by quenching and tempering treatment in a continuous furnace. The steel plate after slowly cooling is treated by quenching in a continuous furnace, the quenching heating temperature is 900° C, the time in the furnace is 1.9 min/mm, a quenching machine is used during water quenching until the surface temperature of the steel plate is 100°C, and then the steel plate is air-cooled to room temperature. The steel plate after quenching treatment is treated by tempering in a continuous furnace. The tempering temperature is 660° C, the time in the furnace is 2.7 min/mm, and then the steel plate is air-cooled outside the furnace to room temperature.

The finished steel plate produced by above process has excellent combination performance of high strength, good plasticity, high toughness at a low temperature and high Z-direction performance, is mechanical performance is shown in table 1.

### Embodiment 4 (not being part of the present invention)

The thickness of the rack steel plate relating to the present embodiment is 127 mm, the constituents and mass percentages including: C: 0.11%, Si: 0.28 %, Mn: 1.04%, P: 0.004%, S: 0.0009%, Cr: 0.52%, Mo: 0.50%, Ni: 1.36%, Cu: 0.22%, Al: 0.072%, V: 0.038%, N: 0.0031%, B: 0.0017%, the balance is Fe and unavoidable impurity elements, Carbon equivalent Ceq = 0.60%.

The raw materials configured by above constituents of the rack steel plate are processed in sequence by KR molten steel pretreatment, converter smelting, LF refining, RH refining, continuous casting through a straight-arc continuous casting machine (the thickness of the continuous casting slab is 370 mm), shielding the continuous casting slab with a cover and slowly cooling, cleaning the continuous casting slab, heating (keeping warm), high-pressure water descaling, control rolling, straightening, shielding the continuous casting slab with a cover and stacking and slowly cooling, quenching and tempering treatment.

Further, the special process of above heating, control rolling and cooling is as flows: heating the continuous casting slab (central segregation is class C grade 0.5, center porosity is grade 0.5, free of center cracks, corner cracks and triangular area cracks, regarding inclusions, coarse inclusions of Group A, Group B, Group C and Group D =0; fine inclusions of Group A, Group B and Group D = 0.5; fine inclusions of Group C = 0, Group Ds = 0) to 1220°C and keeping warm for 2.5 hours, after outside the furnace treating the continuous casting slab by high-pressure water descaling, and then processing completely longitudinally rollingunder two stages. The rolling starting temperature of the first stage (i.e. coarse rolling) is 1070° C, the thickness of the intermediate slab is 180 mm, the total compression ratio = 51.4%, the highest reduction rate of a single pass = 19.1%; the rolling starting temperature of the second stage (i.e. fine rolling) is 910°C, the thickness of the finished plate is 127 mm, the total compression ratio = 29.4%. After rolling the continuous casting slab is straightened, and then the straightened steel plate is cooled to 600-650° C on a cooling table, and then is removed away from the cooling table, and then is shielded with a cover and slowly cooled in a stack, until the steel plate is cooled to 150°C, slowly cooling of the steel plate is finished.

The steel plate is treated by quenching and tempering treatment in a continuous furnace. The steel plate after slowly cooling is treated by quenching in a continuous furnace, the quenching heating temperature is 930° C, the time in the furnace is 1.8 min/mm, a quenching machine is used during water quenching until the surface temperature of the steel plate is 70°C, and then the steel plate is air-cooled to room temperature. The steel plate after quenching treatment is treated by tempering in a continuous furnace. The tempering temperature is 640° C, the time in the furnace is 3.0 min/mm, and then the steel plate is air-cooled outside the furnace to room temperature.

The finished steel plate produced by above process has excellent combination performance of high strength, good plasticity, high toughness at a low temperature and high Z-direction performance, its mechanical performance is shown in table 1.

### Embodiment 5 (not being part of the present invention)

The thickness of the rack steel plate relating to the present embodiment is 114.3 mm, the constituents and mass percentages including: C: 0.12%, Si: 0.27 %, Mn: 1.04%, P: 0.006%, S: 0.0006%, Cr: 0.49%, Mo: 0.46%, Ni: 1.39%, Cu: 0.22%, Al: 0.0069%, V: 0.034%, N: 0.0022%, B: 0.0016%, the balance is Fe and unavoidable impurity elements, Carbon equivalent Ceq = 0.60%.

The raw materials configured by above constituents of the rack steel plate are processed in sequence by KR molten steel pretreatment, converter smelting, LF refining, RH refining, continuous casting through a straight-arc continuous casting machine (the thickness of the continuous casting slab is 370 mm), shielding the continuous casting slab with a cover and slowly cooling, cleaning the continuous casting slab, heating (keeping warm), high-pressure water descaling, control rolling, straightening, shielding the continuous casting slab with a cover and stacking and slowly cooling, quenching and tempering treatment.

Further, the special process of above heating, control rolling and cooling is as flows: heating the continuous casting slab (central segregation is class C grade 0.5, center porosity is grade 0.5, free of center cracks, corner cracks and triangular area cracks, regarding inclusions, coarse inclusions of Group A, Group B and Group C = 0, coarse inclusions of Group D =0.5; fine inclusions of Group A and Group B = 0.5; fine inclusions of Group C and Group D = 0, Group Ds = 0) to 1270°C and keeping warm for 2 hours, after that treating the continuous casting slab by high-pressure water descaling, and then processing completely longitudinally rolling under two stages. The rolling starting temperature of the first stage (i.e. coarse rolling) is 1070° C, the thickness of the intermediate slab is 195 mm, the total compression ratio = 47.3%, the highest reduction rate of a single pass = 19.2%; the rolling starting temperature of the second stage (i.e. fine rolling) is 920°C, the thickness of the finished plate is 114.3 mm, the total compression ratio = 41.4%. After rolling the continuous casting slab is straightened, and then the straightened steel plate is cooled to 600-650° C on a cooling table, and then is removed away from the cooling table, and then is shielded with a cover and slowly cooled in a stack, until the steel plate is cooled to 150°C, slowly cooling of the steel plate is finished.

The steel plate is treated by quenching and tempering treatment in a continuous furnace. The steel plate after slowly cooling is treated by quenching in a continuous furnace, the quenching heating temperature is 900° C, the time in the furnace is 2.0 min/mm, a quenching machine is used during water quenching until the surface temperature of the steel plate is ~50°C, and then the steel plate is air-cooled to room temperature. The steel plate after quenching treatment is treated by tempering in a continuous furnace. The tempering temperature is 650° C, the time in the furnace is 2.5 min/mm, and then the steel plate is air-cooled outside the furnace to room temperature.

The finished steel plate produced by above process has excellent combination performance of high strength, good plasticity, high toughness at a low temperature and high Z-direction performance, its mechanical performance is shown in table 1.

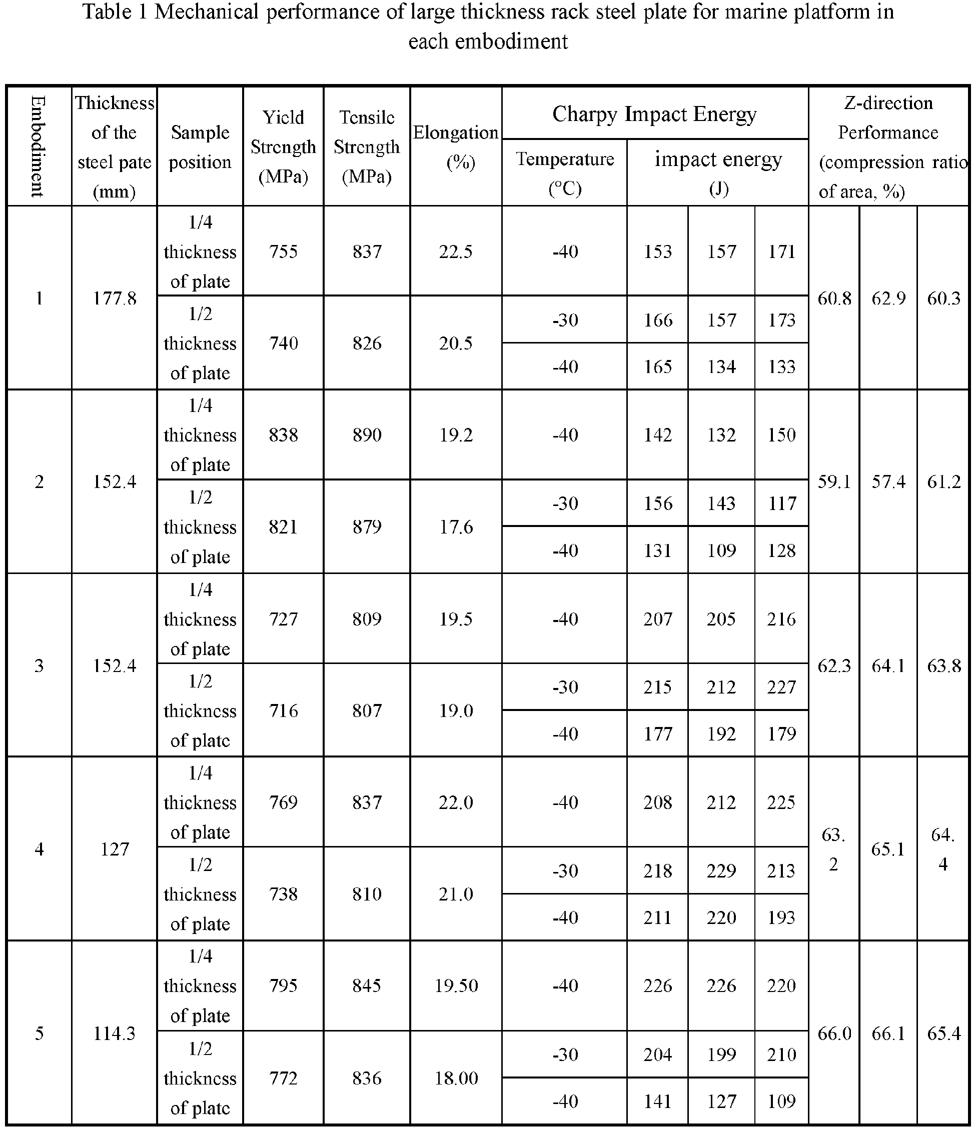

As shown in table 1, the Z-direction performance (compression ratio of area) of the rack steel plate of large thickness in present invention achieves the top requirement of Z direction compression ratio ≥35% of the steel plate for marine engineering, to ensure the ability of resistance to lamellar tearing of the rack steel plate of large thickness. The Z-direction performance also shows a high compactness of the steel plate along the direction of thickness, hence, it also indicates that the rack steel plate of large thickness directly by the continuous casting slab in present invention has a high compactness, thereby ensures satisfying the strict requirements to the performance of the central part of the rack steel plate.

## Claims

1. A method of manufacturing a rack steel plate with a thickness of 177.8 mm,
wherein the rack steel plate has following constituents by mass percentage: C: 0.14%, Si: 0.24%, Mn: 1.08%, P: 0.004%, S: 0.0008%, Cr: 0.68%, Mo: 0.49%, Ni: 2.47%, Cu:0.22%, Al: 0.073%, V: 0.036%, Nb: 0.02%, N: 0.0027%, B: 0.0013%, the balance is Fe and unavoidable impurity elements, Carbon equivalent Ceq (= C + Mn/6 + (Cr + Mo + V)/5 + (Cu + Ni)/15) = 0.74%;
the method comprising following steps:
(1) raw materials are processed in sequence by KR molten steel pretreatment, converter smelting, LF refining, RH refining, and continuous casting through a straight-arc continuous casting machine, thereby obtaining a continuous casting slab with a thickness of 450 mm,
(2) shielding the continuous casting slab with a cover and slowly cooling,
(3) cleaning the continuous casting slab,
(4) heating,
(5) high-pressure water descaling,
(6) rolling,
(7) straightening,
(8) slowly cooling under control,
(9) quenching and tempering treatment.
wherein the continuous casting slab meets following requirements:
central segregation is class C grade 0.5,
center porosity is grade 0.5,
free of center cracks, corner cracks or triangular area cracks;
regarding inclusions, coarse inclusions of Group A, Group B, Group C and Group D = 0; fine inclusions of Group A, Group B and Group D = 0.5; fine inclusions of Group C = 0, Group Ds = 0,
wherein
in the step (4) the continuous casting slab is heated to 1260°C, and kept warm for 3.5 hours,
in the step (5) the continuous casting stab is treated by high-pressure water descaling,
in the step (6) the rolling is performed under two stages: in the first stage, the rolling starting temperature of the first stage is 1140° C, the thickness of the intermediate slab is 235mm, the total compression ratio = 47.8%, the highest reduction rate of a single pass is 18.1%; in the second stage, the rolling starting temperature of the second stage is 880°C, the thickness of the finished plate is 177.8mm, the total compression ratio = 24.3%;
in the step (8), the steel plate is heated to 620°C and kept warm for 72 hours, and cooled to 200°C along with the furnace, and then air-cooled outside the furnace to room temperature;
in the step (9), the steel plate is heated by quenching in a continuous furnace, the quenching heating temperature is 900°C, the time in the furnace is 1.8min/mm, a quenching machine is used during water quenching, until the surface temperature of the steel plate is 70°C, and then the steel plate is air-cooled to room temperature; the steel plate after quenching treatment is treated by tempering in a continuous furnace, the tempering temperature is 660° C, the time in the furnace is 2.8min/mm, and then the steel plate is air-cooled outside the furnace to room temperature.

## Patentansprüche

1. Verfahren zur Herstellung einer Zahnstangenstahlplatte mit einer Dicke von 177,8 mm, wobei die Zahnstangenstahlplatte folgende Bestandteile nach Massenprozent aufweist: C: 0,14 %, Si: 0,24 %, Mn: 1,08 %, P: 0,004 %, S: 0,0008 %, Cr: 0,68 %, Mo: 0,49 %, Ni: 2,47 %, Cu:0,22 %, Al: 0,073 %, V: 0,036 %, Nb: 0,02 %, N: 0,0027 %, B: 0,0013 %, der Rest ist Fe und unvermeidbare Verunreinigungselemente, Kohlenstoffäquivalent Ceq (= C + Mn/6 + (Cr + Mo + V)/5 + (Cu + Ni)/15) = 0,74 %;
wobei das Verfahren die folgenden Schritte umfasst:
(1) Rohstoffe werden nacheinander durch Vorbehandlung von KR-Stahlschmelze, Konverterschmelzen, LF-Raffinierung, RH-Raffinierung und Stranggießen durch eine Stranggussmaschine mit geradem Lichtbogen verarbeitet, wodurch eine Stranggussbramme mit einer Dicke von 450 mm erhalten wird,
(2) Abschirmen der Stranggussbramme mit einer Abdeckung und langsames Abkühlen,
(3) Reinigen der Stranggussbramme,
(4) Erhitzen,
(5) Entzundern mit Hochdruckwasser,
(6) Walzen,
(7) Richten,
(8) langsames Abkühlen unter Kontrolle,
(9) Abschreck- und Anlassbehandlung
wobei die Stranggussbramme folgende Anforderungen erfüllt:
zentrale Abtrennung ist Klasse C Güte 0,5,
Zentralporosität ist Güte 0,5,
frei von Mittenrissen, Eckrissen oder Dreiecksbereichsrissen;
im Hinblick auf Einschlüsse, grobe Einschlüsse der Gruppe A, Gruppe B, Gruppe C und Gruppe D = 0; feine Einschlüsse der Gruppe A, Gruppe B und Gruppe D = 0,5; feine Einschlüsse der Gruppe C = 0, Gruppe Ds = 0,
wobei
im Schritt (4) die Stranggussbramme auf 1260 °C erhitzt und für 3,5 Stunden warmgehalten wird,
im Schritt (5) die Stranggussbramme durch Entzundern mit Hochdruckwasser behandelt wird,
im Schritt (6) das Walzen unter zwei Stufen erfolgt: in der ersten Stufe beträgt die Walzstarttemperatur der ersten Stufe 1140 °C, beträgt die Dicke der Zwischenbramme 235 mm, beträgt das Gesamtkompressionsverhältnis = 47,8 %, beträgt die höchste Reduktionsrate eines einzelnen Durchgangs 18,1 %; in der zweiten Stufe beträgt die Walzstarttemperatur der zweiten Stufe 880 °C, beträgt die Dicke der fertigen Platte 177,8 mm, das Gesamtkompressionsverhältnis = 24,3 %;
im Schritt (8) die Stahlplatte auf 620 °C erhitzt und für 72 Stunden lang warmgehalten und zusammen mit dem Ofen auf 200 °C abgekühlt und anschließend außerhalb des Ofens auf Raumtemperatur luftgekühlt wird;
im Schritt (9) die Stahlplatte durch Abschrecken in einem Durchlaufofen erhitzt wird, die Abschreckheiztemperatur 900 °C beträgt, die Zeit im Ofen 1,8 min/mm beträgt, eine Abschreckmaschine während des Wasserabschreckens verwendet wird, bis die Oberflächentemperatur der Stahlplatte 70 °C beträgt, und anschließend die Stahlplatte auf Raumtemperatur luftgekühlt wird; die Stahlplatte wird nach Abschreckbehandlung durch Anlassen in einem Durchlaufofen behandelt, die Anlasstemperatur beträgt 660 °C, die Zeit im Ofen beträgt 2,8 min/mm und anschließend wird die Stahlplatte außerhalb des Ofens auf Raumtemperatur luftgekühlt.

## Revendications

1. Procédé de fabrication d'une plaque d'acier à crémaillère d'une épaisseur de 177,8 mm,
ladite plaque d'acier à crémaillère comportant les constituants suivants en pourcentage en poids : C : 0,14 %, Si : 0,24 %, Mn : 1,08 %, P : 0,004 %, S : 0,0008 %, Cr : 0,68 %, Mo : 0,49 %, Ni : 2,47 %, Cu : 0,22 %, Al : 0,073 %, V : 0,036 %, Nb : 0,02 %, N : 0,0027 %, B : 0,0013 %, le reste étant du Fe et des éléments d'impuretés inévitables, Carbone équivalent Ceq (= C + Mn/6 + (Cr + Mo + V)/5 + (Cu + Ni)/15) = 0,74 % ;
le procédé comprenant les étapes suivantes :
(1) les matières premières sont traitées en séquence par le prétraitement de l'acier fondu KR, la fusion par convertisseur, l'affinage LF, l'affinage RH et la coulée continue à travers une machine de coulée continue à arc droit, obtenant ainsi une brame de coulée continue d'une épaisseur de 450 mm,
(2) protection de la brame de coulée continue avec un couvercle et refroidissement lent,
(3) nettoyage de la brame de coulée continue,
(4) chauffage,
(5) décalaminage à l'eau haute pression,
(6) laminage,
(7) redressage,
(8) refroidissement lent sous régulation,
(9) traitement de trempe et revenu
ladite brame de coulée continue répondant aux exigences suivantes :
la ségrégation centrale est de classe C grade 0,5,
la porosité centrale est de grade 0,5,
exempt de fissures centrales, de fissures d'angle ou de fissures triangulaires ;
concernant les inclusions, des inclusions grossières du groupe A, du groupe B, du groupe C et du groupe D = 0 ; des inclusions fines du groupe A, du groupe B et du groupe D = 0,5 ; des inclusions fines du groupe C = 0, groupe Ds = 0,
à l'étape (4) la brame de coulée continue est chauffée à 1260°C, et maintenue chaude pendant 3,5 heures, à l'étape (5) la brame de coulée continue est traitée par décalaminage à l'eau à haute pression, à l'étape (6) le laminage est réalisé en deux étapes : dans la première étape, la température de début de laminage de la première étape est de 1140°C, l'épaisseur de la brame intermédiaire est de 235 mm, le taux de compression total = 47,8 %, le taux de réduction le plus élevé d'une seule passe est de 18,1 % ; dans la seconde étape, la température de début de laminage de la seconde étape est de 880°C, l'épaisseur de la plaque finie est de 177,8 mm, le taux de compression total = 24,3 % ;
à l'étape (8), la plaque d'acier est chauffée à 620°C et maintenue chaude pendant 72 heures, et refroidie à 200°C avec le four, et ensuite refroidie à l'air à l'extérieur du four jusqu'à température ambiante ;
à l'étape (9), la plaque d'acier est chauffée par trempe dans un four continu, la température de chauffage de trempe est de 900°C, le temps dans le four est de 1,8 min/mm, une machine de trempe est utilisée durant la trempe à l'eau, jusqu'à ce que la température de surface de la plaque d'acier est de 70°C, et ensuite la plaque d'acier est refroidie à l'air jusqu'à la température ambiante ; la plaque d'acier après le traitement de trempe est traitée par revenu dans un four continu, la température de revenu est de 660°C, le temps dans le four est de 2,8 min/mm, et ensuite la plaque d'acier est refroidie à l'air à l'extérieur du four jusqu'à la température ambiante.
